# EUROPEAN PATENT SPECIFICATION

(11) **EP 1 842 742 B1**
(45) Date of publication and mention of the grant of the patent: **17.12.2008**
(21) Application number: 07007270.7
(22) Date of filing: 06.04.2007
(51) Int. Cl.: B60R 21/233

(54) **Airbag with vertical groove**
Airbag mit senkrechter Rille
Coussin gonflant à rainure verticale

(30) Priority: 07.04.2006 US 790185 P; 17.10.2006 US 550033
(43) Date of publication of application: 10.10.2007
(73) Proprietor: KEY SAFETY SYSTEMS, INC., Sterling Heights, MI 48314 (US)
(72) Inventor: Pang, Hyunsok, Rochester Hills, MI 48309 (US); Kim, Soonsik, Rochester Hills, MI 48309 (US); Coon, Jeffrey S., Sterling Heights, MI 48312 (US)
(74) Representative: Gislon, Gabriele

(56) References cited:
- EP-A- 1 364 838
- DE-U1- 20 218 732
- JP-A- 2005 247 118
- US-B1- 7 131 664
- US-B1- 7 152 880

## Description

The present invention relates to passenger side airbags deployed from an instrument panel of a vehicle.

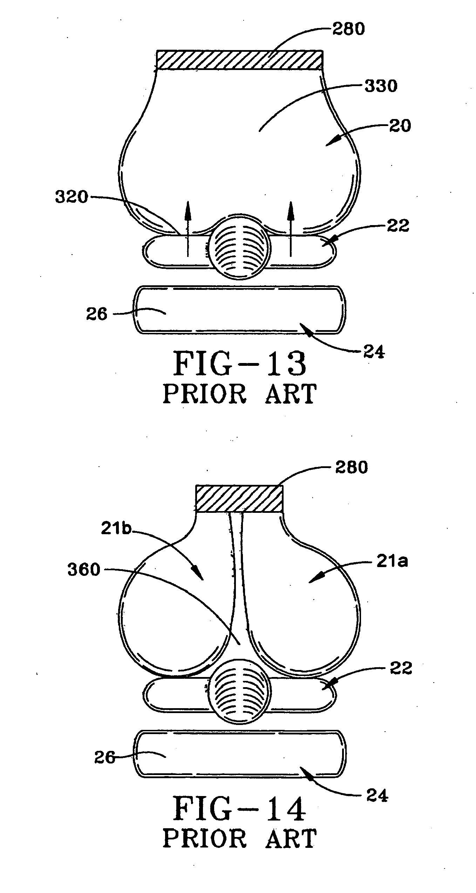

Figure 13 shows a conventional passenger side frontal airbag 20 with a single inflatable chamber 330 that has been inflated by an airbag inflator 280. The face portion or front panel 320 of the airbag 20 impacts a vehicle occupant 22 across the chest, shoulders and head. As the vehicle occupant assumes a seated position closer to the vehicle's instrument panel and away from the seat back 26 of the seat 24, the velocity at which the airbag impacts the vehicle occupant increases. If the vehicle occupant's body is contacting or near the cover of the airbag module at the time of airbag deployment, the interaction between the vehicle occupant and the airbag is increased.

To reduce injuries to vehicle occupants including children, infants in child seats and vehicle occupants seated in out-of-position orientation, some newer, more complicated airbag systems propose controlling the rate of airbag inflation by using various sensors to determine the weight, size or seat location of the vehicle occupant. Sensors are costly and require a very high degree of reliability to insure they function over the life of a vehicle. None of the airbag systems commonly used can accommodate the deployment of an airbag towards an infant in an infant seat located upon the front seat of a vehicle and facing the rear of a vehicle. All vehicle manufacturers provide warnings against such a use of the child seat or alternately provide a means for manually deactivating the airbag.

Figure 14 shows a prior art proposal that an inflatable cushion or airbag can be formed with two airbags 21a, 21b, which when inflated are separated by a space 360. When these airbags are inflated, they will take the shape shown in which the space 360 is positioned in front of the normally seated vehicle occupant 22, thereby avoiding contact with the vehicle occupant's head. The interaction of the airbags and the vehicle occupant is primarily by the two airbags against the sides of the vehicle occupant's torso and shoulders. This airbag system leads to an out-of-position vehicle occupant being subjected to excessive forces.

In the United States of America, the National Highway Transportation Safety Administration criteria of a one year old, a three year old, a six year old, a 47.6 kg female (5^{th} percentile) are each considered sufficiently different to warrant separate criteria for airbag deployment beyond that of a normal size and weight adult vehicle occupant. Similarly, pregnant women have unique requirements to insure survivability of the infant they are carrying.

The safety restraints industry desires to provide vehicle occupant restraint devices with a maximum range of safety for the greatest number of potential users at the highest possible reliability while still being affordably priced. Complex sensors and controls increase the number of components, which inherently increases the risk of a component malfunction and causes engineers use redundancy that increases cost.

US 7 152 880 B1 discloses an airbag having: a single inflatable chamber formed by a main panel and pair of side panels integral to or otherwise attached along mating edges wherein the main panel has a top portion, a front portion and a lower portion, a vertically oriented recessed portion formed on a forward facing portion of the airbag, the recessed portion dividing the inflatable chamber into two lobe portions and a tether located in the inflatable chamber and having one end attached to the recessed portion and a second end that is anchored thereby limiting forward movement of the recessed portion upon inflation of the inflatable chamber. An airbag according to claim 1 of the present application is an improvement over US 7 152 880 B1 because it can meet the government requirements and test criteria for a one year old, a three year old, a six year old, a 5^{th} percentile woman, and a 50^{th} percentile adult passenger without the expense of exotic sensing systems and computerized algorithms.
Figure 1 shows an inflated airbag according to US 7 152 880 B1.
Figure 1A is an isometric view of the airbag of Figure 1 in relation to a vehicle's windscreen and seat. The right side panel is partially removed to show the interior of the airbag.
Figure 1B is a top plan view of the airbag of Figure 1.
Figure 1C is an isometric view of an alternative airbag; part of the right side panel has been removed.
Figure 1D is a top view of the airbag of Figure 1C.
Figure 1E is another isometric view of the airbag of Figure 1C having a complete right side panel and an optional vent in one or both side panels.
Figure 2 is a view of the various airbag components of the airbag of Figure 1 shown prior to being sewn together.
Figure 2A shows another embodiment of the invention.
Figure 2B shows the layout of panels useful for the embodiment shown in Figure 4B (as well as in Figure 4A).
Figure 3 is a side plan view illustrating one of the side panels of the airbag of Figure 1, as well as a center panel of a recessed portion forming structure and a tether shown by phantom lines.
Figure 4 shows an alternative version of the airbag of Figure 1.
Figure 4A shows another alternative version of the airbag of Figure 1.
Figure 4B shows another alternative version of the airbag of Figure 1.
Figure 5 shows a further alternative of the airbag of Figure 1.
Figure 6 shows still another alternative of the airbag of Figure 1.
Figure 7 is perspective view of an airbag according US 7 131 664 B1 shown in a deployed and inflated condition.
Figure 8 is a top view looking down at the airbag of Figure 7.
Figure 9 is a front view of the airbag of Figure 7.
Figure 10 is a perspective view of the airbag of Figure 7 with most of the left side panel removed to show the internal tethers and diffuser components.
Figure 11 is the perspective view of Figure 10 with both side panels removed.
Figures 11A through 11H are plan views of the various airbag components shown prior to being sewn together.
Figures 12A through 12H are plan views of an alternative embodiment of the airbag showing the panels and other components in plan view prior to assembly wherein the recess side panels and tethers are modified from the embodiment shown in Figures 11A through 11H.
Figure 13 is a top view of one type of prior art airbag.
Figure 14 is a top view of another prior art airbag.
Figure 15 is a cross-sectional view of an exemplary inflator that can be used in combination with the airbag of the present invention.

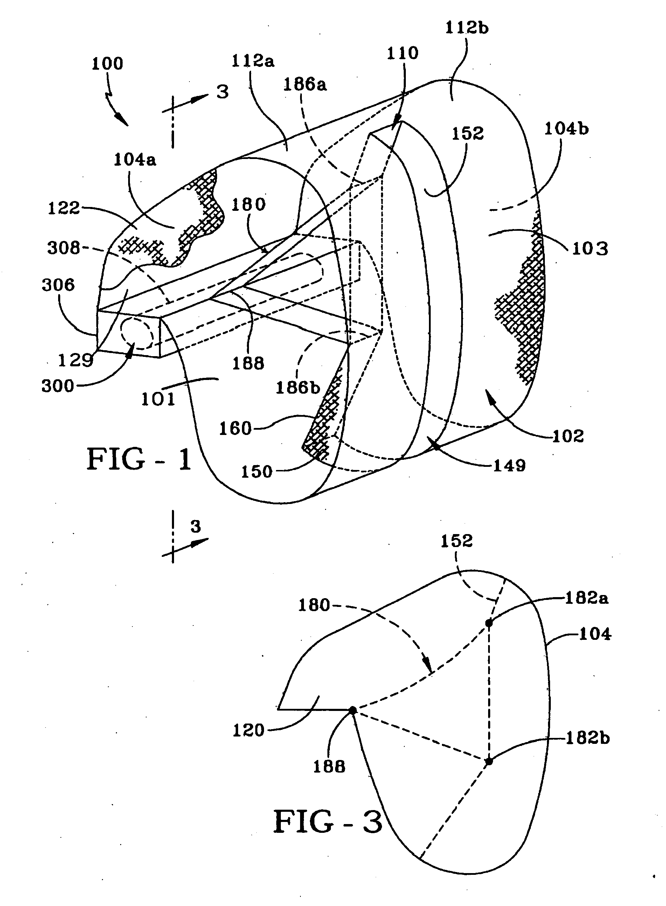

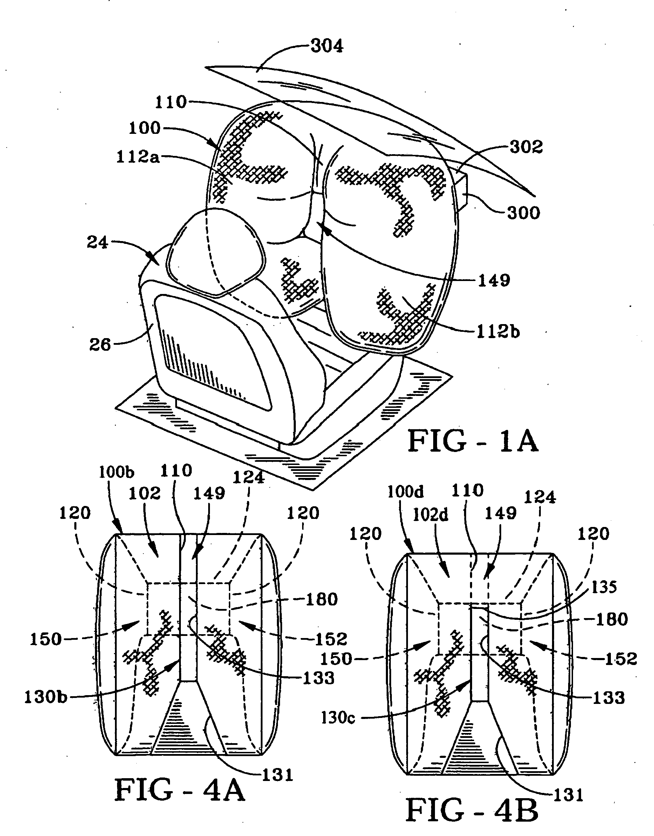

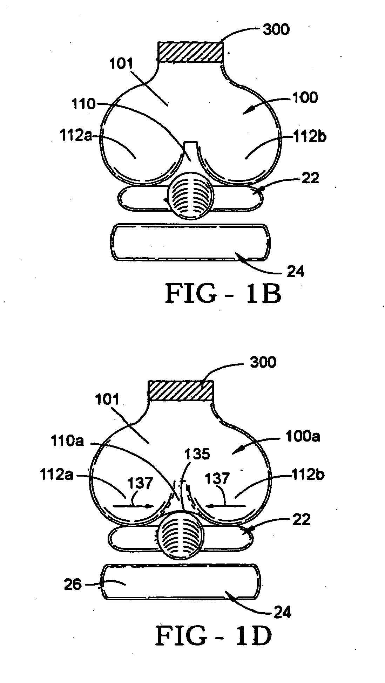

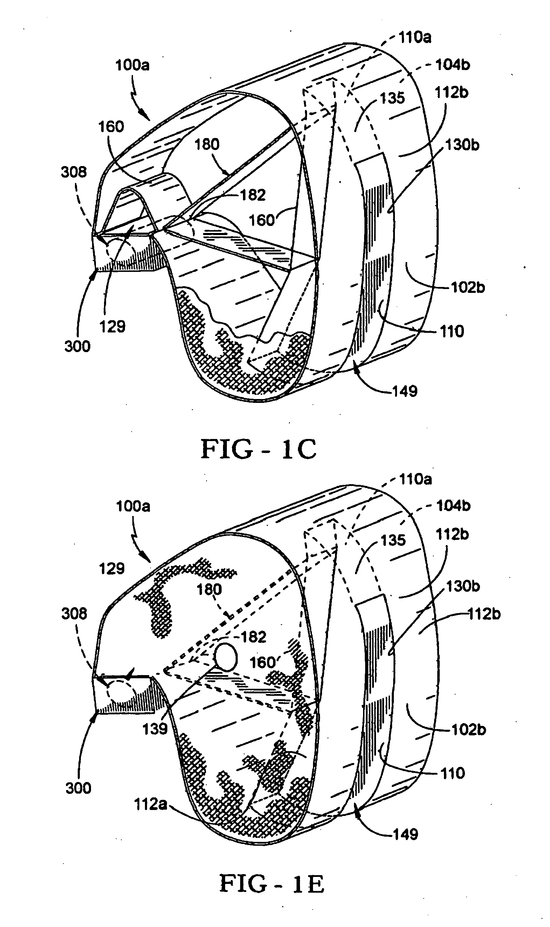

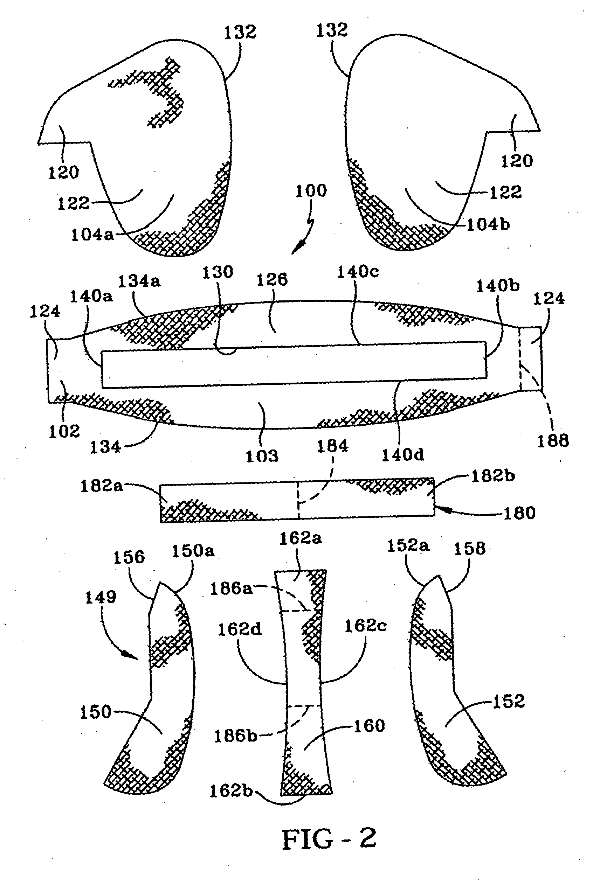

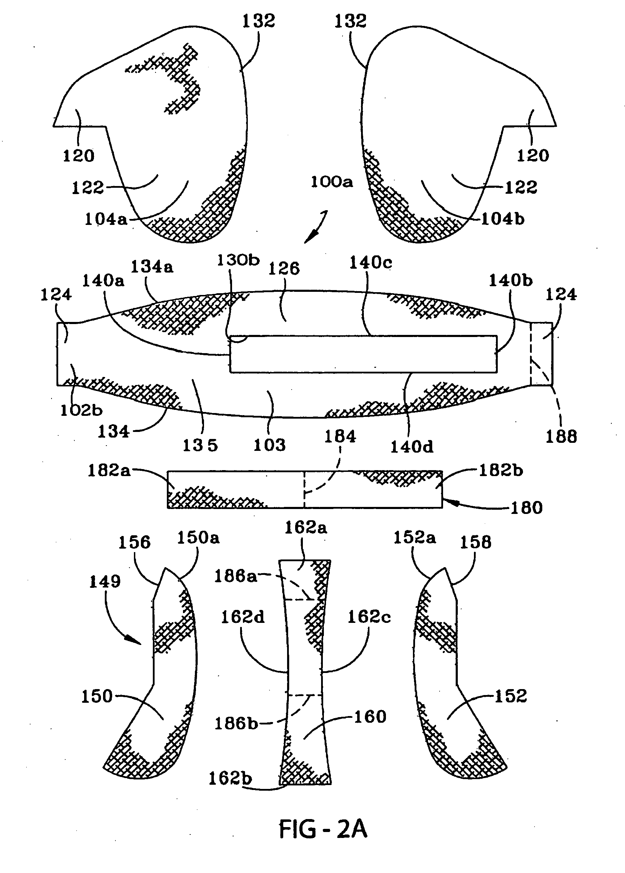

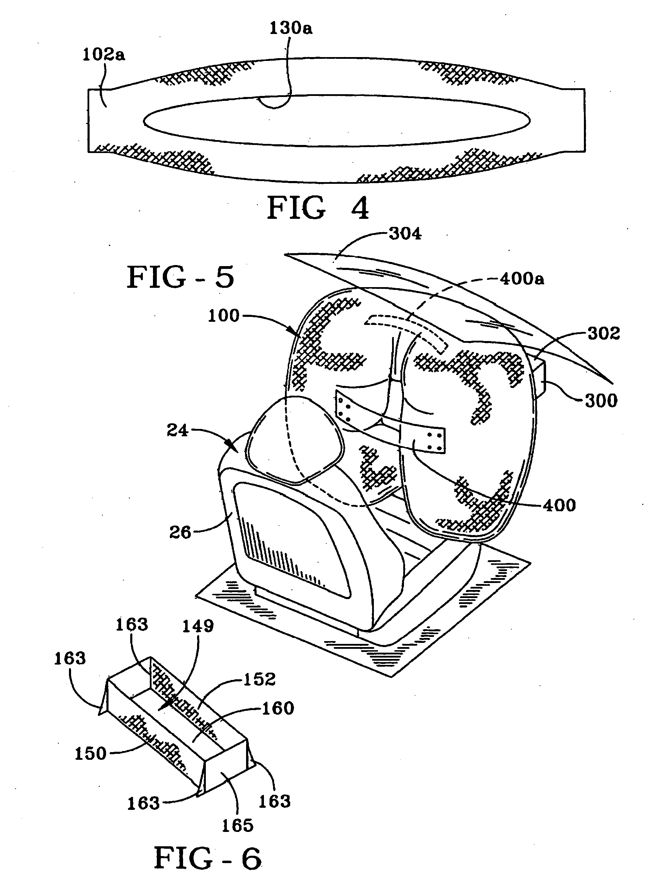

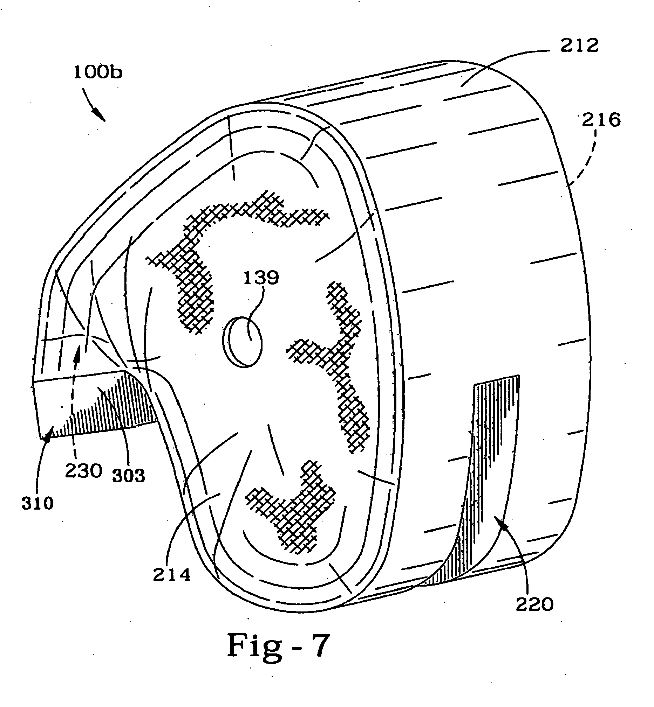

Figures 1 - 6 show an airbag having a single inflatable chamber configured with a vertically oriented recessed portion that runs substantially from the top to the bottom of that portion of the airbag facing the vehicle occupant to be protected. The term "recess" as used herein and in the claims means a concavity in the surface, such as an enclosure that is set back or indented. In this embodiment, the main panel of the airbag has a long slot or opening forming the entrance, opening or mouth of the recessed portion. Figures 1C, 1D, 1E, 8A and 11A illustrate another embodiment utilizing a similar construction to achieve the recessed portion of about the same size. The opening in the main panel is reduced in size, and upon assembly a portion of the main panel covers a top of the recessed portion. In a broad sense the covering portion of the main panel provides a bridge that extends over the top portion of the recessed portion. Figure 4A shows the use of a trapezoid shaped recessed portion. In Figure 4B this variation uses a portion of the main panel to cover the top of the recessed portion. In Figures 7 through 12 the recessed portion is foreshortened and extends from the middle of the main panel to the lower portions of the airbag; however, in these embodiments this shortened recessed portion with a correspondingly smaller opening in the main panel does not extend under the main panel as in the embodiments shown, for example, in Figures 1A and 2A.

The airbag 100 shown in various figures has a single inflatable chamber 101 and can be formed by one or more panels of fabric. The airbag can be woven or knitted as a one-piece construction or formed by sewing or bonding a plurality of panels together. A recessed portion 110 is formed behind the panel or portion of the airbag facing the vehicle occupant to be protected. In the illustrated embodiment, the airbag 100 has a main panel 102 having a face panel portion 103, which faces the vehicle occupant to be protected, and a plurality of side panels 104a, 104b. The size of the airbag and its various panels will change in each vehicular application. It is not necessary to form the airbag with separate side panels and a linking main, or center, panel. Each of these panels is typically made from woven fabric comprising nylon or polyester. The side panels 104a, 104b are substantially identical and are mirror images of each other. Each of the side panels 104a, 104b has a neck portion 120 configured to communicate with an inflator and a cushion portion 122. The main panel has a top or end or upper portion, a middle portion and a lower or end or lower portion.

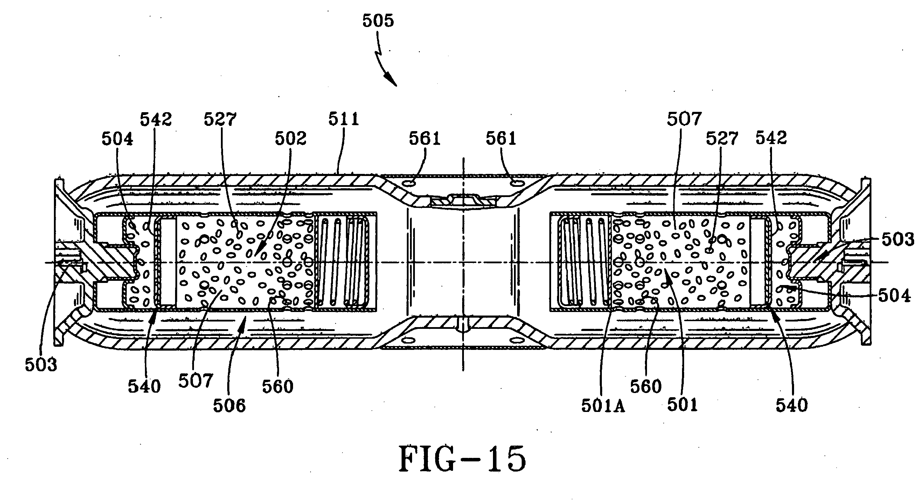

The main panel has a pair of opposing neck portions 124 located at the ends of the main panel. The various neck portions are joined together to form the neck or inlet of the airbag that communicates with to an inflator or a housing in a known manner. The front portion 126 of the main panel 102 is located in the center of the main panel, a part of the center portion of which faces the vehicle occupant and forms the face panel portion 103. The front portion 126, in the vicinity of the face panel portion 103, has an opening 130 therein, which is used to form a recess and more specifically the opening to the recess in the inflated airbag 100. The airbag 100 is formed by sewing an edge 132 of the side panel 104a to an edge 134 of the main panel 102. An edge 132 of the other side panel 104b is sewn to an edge 134a of the main panel 102 in a known manner. The inflatable chamber 301 has an opening, passage or neck 129 formed by the ends or neck portions of the main panel cooperating with the side panels to allow inflation gas to enter the inflatable chamber 301 and inflate the airbag 100. Upon assembly of the various panels, an inflator 308 as shown in Figures 1 and 15 is positioned within the neck of the airbag. Prior to deployment the airbag is folded and stored in a housing 306 of an airbag module 300.

The width of the recessed portion 110 in the inflated airbag is at least 25% of the width of the front portion 126 of the main panel 212, preferably between 25% and 35% of the overall width. This may be in the range of about 120 - 250 mm. The overall length of the recess can be varied between 85% and 90% of the overall airbag height typically in about 1500 - 1600 mm.

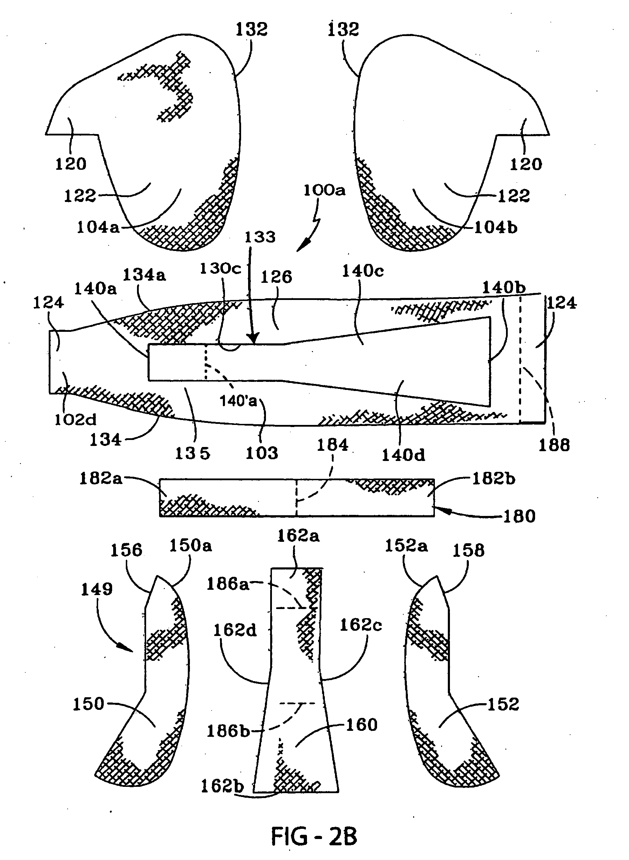

The opening 130 in the main panel 102 has one or more edges 140a, 140b, 140c, 140d. Even though the opening 130 is shown as rectangular in shape, the opening 130 can have other shapes including oblong, as shown in Figure 4, which shows an alternate main panel 102a with an oval opening 130a. The opening in the face panel portion can be a hybrid shape. The opening 130a of Figure 4A uses a recessed portion 110 formed as a combination of trapezoidal or triangular 131 and rectangular 133. The trapezoidal shape, with its larger opening, located toward the bottom of the airbag, helps to minimize interference with a child or small adult in an out-of-position seating position with their head or chest on or very close to the cover of the airbag module. Figure 2B shows the layout of the various panels useful in making the airbag in Figure 4A and is useful in understanding the construction of the airbag shown in Figure 4B. In Figure 2B the top 140a of the rectangular portion 133 of opening 130c is positioned toward the top of panel 102d so that the recessed portion can run from the top to the bottom of the face portion of the airbag, as was the case with the earlier embodiments. Figure 2B also shows a dotted line 140'a, which shows the location of the top of the opening 130c for use with the airbag in Figure 4B in which the upper portion 135 of the main panel 102d covers the top portions of the recessed portion 110. Here, as in the embodiment shown in Figure 1C, the top portion of the main panel bridges the lobes 112a, 112b.

In Figures 1 and 2 the airbag 100 has a concavely shaped groove shaped or recessed structure 149 that can be formed using one or multiple panels such as panels 150, 152, 160 of fabric fitted within the opening 130; 130a and sewn or otherwise secured to the edges 140a - 140d of the main panel opening 130. The groove shaped or recessed structure 149 is located within the airbag below the exterior surface of the main panel and is used, in cooperation with a tether and other panels of fabric, to create a recessed portion 110 between opposing lobe portions 112a, 112b of the single chambered airbag. The groove shaped or recessed structure 149 can be formed by providing a shaped, single panel or by sewing one or more panels of fabric to the edges 140a - 140d of the opening 130.

The airbag 100 of Figure 2 has a left recess panel 150 and a right recess panel 152. An edge 150a of the left recess panel 150 is sewn to an edge 140d of the opening 130 in the main panel, while an edge 152a of the right recess panel 152 is sewn to another edge 140c of the opening 130 in main panel 102. Both the left recess panel 150 and right recess panel 152 further has a respective side edge 156, 158 opposite edges 150a, 152a. When the side panels 150, 152 are sewn to the edges of the opening 130 of the main panel 102, they provide depth to the opening 130, as well as to openings 130a, 130b. The airbag 100 has a center recess panel 160 having edges 162a, 162b, 162c, 162d. The center recess panel follows the shape of the opening in the main panel however, the center recess panel can differ in shape from the opening on the main panel. An edge 162d of the center recess panel is sewn to an edge 156 of the left recess panel 150, while another edge 162c of the center recess panel is sewn to edge 158 of the right recess panel 152. An edge 162a of the center recess panel is sewn to an edge 140a of the opening in the main panel. Another edge 162b of the center recess panel is sewn to an edge 140b of the opening in the main panel. The panels 150, 152, 160 form a groove shaped or recessed structure 149. The concave shape of groove shaped or recessed structure 149 can be formed, for example, by creating pleats 163 positioned about a flat piece of fabric 165, as shown in Figure 6.

If the groove shaped or recessed structure 149, including the three recess panels 150, 152, 160, after being sewn to the main panel 102, is pushed rearward through the opening 130 in the main panel, a recessed portion 110 is formed. If the motion of one or more of the panels 150, 152, 160 is not restrained as the airbag inflates, the groove shaped or recessed structure 149, upon inflation of the airbag, will bulge outwardly in front of the main panel. To prevent bulging the airbag 100 has one or more tethers 180 connected to one or more of the panels 150, 152 or 160. Figure 2 illustrates one such tether. The tether 180 is a panel of fabric that has opposed edges 182a, 182b and an intermediate point or region 184 that divides the tether into two parts. The two parts can be realized by separate pieces of fabric. The tether 180 is secured to a portion of the airbag module 300 such as a module housing 306 or to the main panel 102 proximate the lower neck 124 portion or both.

Figures 1, 2 and 3 illustrate the placement and location of the tether 180 in relation to the other panels forming the airbag 100. Figure 2 illustrates, in regard to panel 160, dotted lines 186a, 186b, which represent the connection line or seam at which edges or ends 182a, 182b of the tether 180 are respectively sewn to the recess center panel 160. Figure 3 also has another dotted line 188 to which the intermediate line or section 184 of the tether 180 is sewn or otherwise connected. Upon inflation of the airbag, the tether 180 is stressed preventing the center recess panel 160, or in the center of the groove shaped or recessed structure 149, from moving outwardly relative to the lobe portions 112a, 112b of the airbag. The tethered groove shaped or recessed structure 149 creates the recessed portion 110 between these lobe portions 112a, 112b and permits the lobe portions 112a, 112b to inflate as shown in Figures 1 and 1A. Figure 1A shows the typical inflated shape of airbag 100. In Figure 1A, the airbag 100 is configured as part of the top mount airbag module 300. The airbag module 300 is placed, in a known manner, at or under the top surface of an instrument panel 302. Upon inflation of the airbag the airbag module's cover (not shown) is forced open and the airbag inflates upwardly toward the windshield 304 and forward toward the seated vehicle occupant. When the term "forward" is used herein and in the claims with respect to the deployment of an airbag it is understood to mean a direction toward a vehicle occupant. In Figure 1A the vehicle occupant is not shown, however, the vehicle seat 24 and seat back 26 are shown. The lobe portions 112a, 112b are clearly shown. Figure 1B is a top view of airbag 100 inflated relative to a seated vehicle occupant showing the lobes 112a, 112b of this single chambered airbag not impacting the head of the vehicle occupant while contacting the torso and shoulders.

As the airbag 100 deploys during inflation the spacing between the inflating lobe portions 112a, 112b might increase in size greater than the steady state spacing. Figure 5 shows a patch 400, preferably made of the same fabric as the airbag, located on the face portion 103 of the main panel 102, which joins the two lobe portions 112a, 112b and serves to limit the spacing of the lobe portions during and after inflation. The fabric for the patch, instead of being airbag fabric, could for example be a length of woven seat belt webbing or any material capable of absorbing a tensile load. In one embodiment a patch 400a joins the tops of both lobe portions and is shown in phantom line and, with the airbag inflated, will extend horizontally between the lobe portions and can be useful in cushioning the vehicle occupant's head. In the preferred embodiment the patch 400 joins opposing middle parts of the lobe portions. The lower patch 400 is positioned to be below the chest of a six year old vehicle occupant when seated in an out-of-position location with his chest on the cover of the airbag module, as well as below the neck of the normally seated 50^{th} percentile adult vehicle occupant.

Figures 1C, 1D, 1E and 2A illustrate an airbag 100a according to the claimed invention that has many of the features of the airbag 100 of Figures 1, 1A and 2. The main panel 102b shown in Figure 2A is substantially identical to main panel 102 of Figure 2 with the exception that the opening 130b is smaller than the opening 130; the other panels in Figure 2A are the same as those in Figure 2. The end or side 140a has been moved toward the center of the panel 102b foreshortening the opening 130b. The remaining panels forming the sides 104a, 104b of the airbag and the recessed portion 110 are substantially identical to the panels used in the airbag 100.

Upon constructing airbag 100a using the same technique as would be used to form airbag 100, the upper portion 135 of main panel 102b forms a bridge having an unsupported span across the upper portions 110a of the recessed portion 110. In essence the upper portions of the lobes of the inflated airbag do not provide for immediate support for the upper portion 135 of the main panel and can be seen in Figures 1C and 1E, which are isometric views showing airbag 100a in an inflated state.

An optional diffuser panel or element 160 is shown. The diffuser element 160 as shown in Figure 1C can also be used in the embodiment of Figure 1 and can be formed by a separate fabric panel or component. Alternatively, the diffuser element 160 may be an integral part of or extension of tether 180. In either form the diffuser element 160 deflects the flow of inflation gases entering the airbag from the inflator laterally towards the side panels as the airbag is unfolding. As a direct result of the position of the diffuser element 160, the gas flow is not in a direct normal or straight-line flow pattern. The inflation gas follows a path that is first directed toward a side of the airbag 100a and then moves forward, which helps slow the deployment rate and the forward thrust of the airbag 100b.

The upper portion 135 of the main panel 102a interacts with the head of a vehicle occupant during a frontal crash as shown in Figures 1C, 1E and 1D. In a crash as the airbag inflates the vehicle occupant impacts the upper portion 135, which operates as a bridge across the upper portion of the recessed portion 110 and spans the opposing lobes 112a, 112b of the airbag. Since the upper portion 135 of the main panel 102b is not directly supported from behind and spans across the opposing lobes 112a, 112b when the upper portion 135 is impacted by the vehicle occupant during a crash, the upper portion 135 is sufficiently resilient to support the vehicle occupant while absorbing the energy of the crash and provides proper support to lessen the deceleration of the vehicle occupant's head during the crash. Testing has shown head accelerations during a 40 kilometer per hour crash for a 50th percentile unbelted male vehicle occupant to be less than a Head Injury Criteria of three hundred, compared with a Head Injury Criteria of seven hundred in the government regulations. The vehicle occupant loads the upper portion 135 of the main panel such that the loading force pulls the opposing lobes together (arrows 137 in Figure 1D) drawing the lobes closer to provide superior support for the vehicle occupant's chest and shoulders in a crash.

The present invention protects out-of-position vehicle occupant as well as small children. If an out-of-position vehicle occupant impacts only one lobe of the airbag compression of the one lobe forces inflation gas through the single chambered airbag into the main chamber to the opposing lobe, providing a resilient cushion to the vehicle occupant. This lessens the forces exerted on the out-of-position vehicle occupant in comparison with a system having two separate airbags.

Figure 1E shows a further embodiment of the invention in which a vent opening 139 is located in a side panel 104a, 104b.

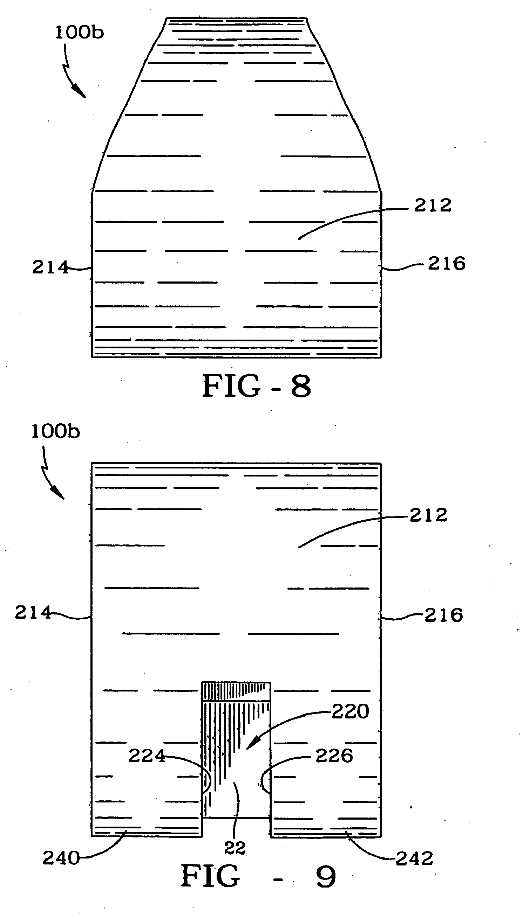

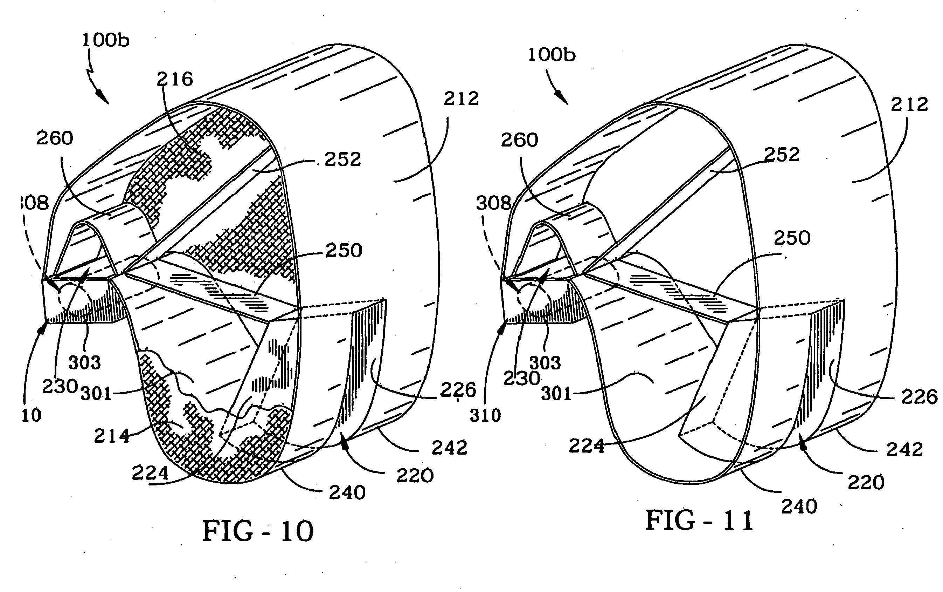

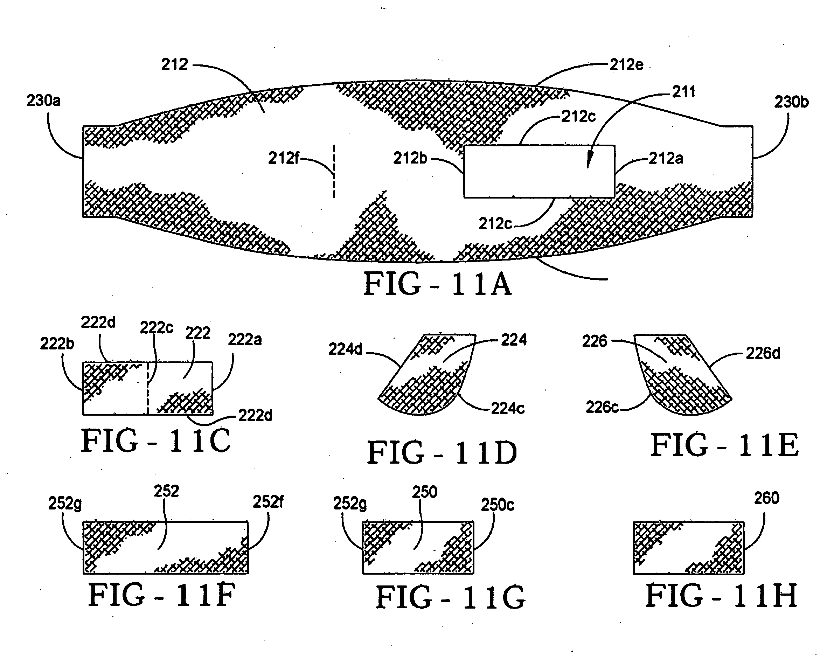

Figures 7 through 12H show an airbag according to US 7 131 664 B1. The recessed portion 220 of this embodiment is located lower than that shown in Figures 1 - 6. In Figure 7 an airbag 100b has a main panel 212 and two side panels 214, 216; the shape and size of the sides panels and the main panel are substantially the same as in the embodiment in Figure 1. The main panel 212 has a top portion, a front portion 126 and a lower portion and, as shown in Figure 11A, can be made from a single panel of airbag fabric. The combination of the main panel 212 and side panels 214, 216 defines a single inflatable chamber 301. The inflatable chamber 301 has an opening formed by the ends or neck portions of the main panel cooperating with the side panels to create a passageway or neck 230 that allows inflation gas to enter the inflatable chamber 301 and inflate the airbag 100b. In Figure 7 a recessed portion 220 of the airbag is shown. The recessed portion 220 of this embodiment has a center recess panel 222, a left recess panel 224 and a right recess panel 226, similar in function to panels 150, 152, 160 though shaped differently, the combination of which forms a recessed portion 220 within the main panel 212. The recessed portion 220 divides the airbag 100b into two lower lobe portions 240, 242 (similar to lobes 112a, 112b though positioned differently). The lower lobe portions 240, 242 are spaced apart by the recessed portion 220 in an amount sufficient to allow each lobe portion to act somewhat independently upon inflation. In Figure 9 the lobe portions 240, 242 are in the front and lower portions of the main panel 212 when the airbag is fully deployed to form a single inflatable chamber 301.

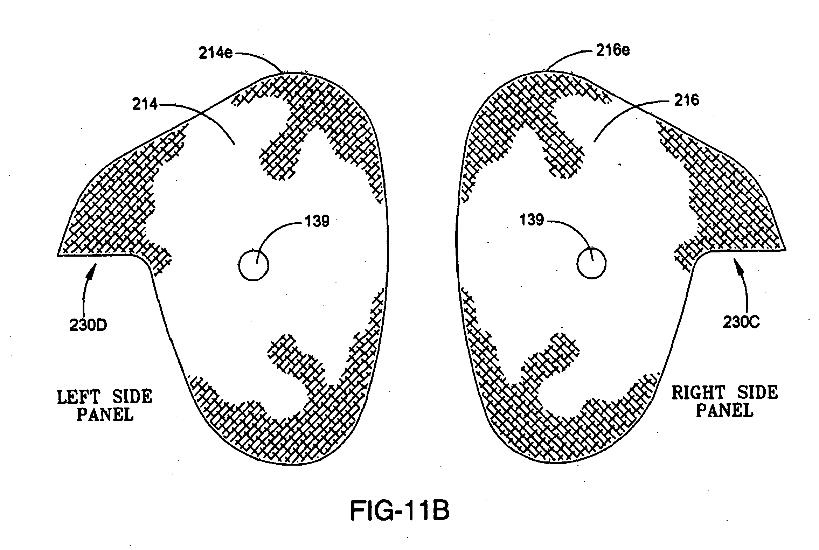

In Figures 10 and 11 the airbag 100b is shown deployed with one or both side panels 214, 216 partially removed or completely removed so that the inflatable chamber 301 of the airbag 100b is visible. In the interior of the airbag 100b the center recessed panel 222 of the recessed portion 220 is connected to a tether 250. The tether 250 extends towards the gas inlet passageway 230. The gas inlet passageway 230 mates with and is attached to an airbag module housing 306 adapted to house both the airbag 100c and an inflator 308 to form an airbag module assembly 310. When a crash is sensed by a crash sensor and an actuating signal is sent to the inflator 308, the inflator provides gases that inflate and propel the airbag 100c outwardly from the instrument panel of the vehicle. The airbag 100b near the gas inlet passageway 230 has an end anchored or otherwise attached to the airbag module housing 303 or other means for securing the airbag. Forward movement of the recessed portion 220 is limited by the tether 250. Preferably, a second tether or one long tether portion 252 is provided to further restrain the upward and forward movement of the airbag 100b such that both the upper portion of the airbag 100b and the lower portion of the airbag 100b are restrained from excess forward movement by the tethers.

An optional diffuser panel or element 260 is shown in figure 1C. The diffuser element 260 as shown in Figures 7 and 11H is a separate fabric component; but alternatively the diffuser element 260 may be an integral part of one or both of the tethers 250, 252. In either form the diffuser element 260 deflects the flow of inflation gases entering the airbag from the inflator towards the side panels 214, 216 as the airbag unfolds. As a result of the position of the diffuser element 260, the gas flow is not in a direct normal or straight-line flow pattern. The inflation gas follows a path that is first directed toward either side of the airbag 100b and then forward, which helps slow the deployment rate and the forward thrust of the airbag 100b.

In this airbag the recessed portion 220 is located only at a lower portion of the deployed airbag extending generally vertically from above the middle of the front portion 126 of the main panel 212 to the lower portion of the main panel 212. The recessed portion 220 is located at or below the location of the gas inlet passageway 230 relative to a horizontal plane passing through the gas inlet passageway when the airbag is in a deployed state. The gas inlet passageway 230 has the inflation gas moving in an upward direction and then deflected by the diffuser element 260. The recessed portion 220, being attached by the tether 250, moves outwardly as the airbag 100b is deployed until the tether 250 becomes taut such that the recessed portion 220 can no longer extend forward towards the vehicle occupant. The side lobe portions 240, 242 continue to develop and inflate and they can absorb the energy impact of the vehicle occupant as the vehicle occupant is moving forward during a vehicle crash. One or more vents or openings 139 are strategically positioned on each side of the airbag 100b to facilitate deflation of the airbag after deployment and interaction with the vehicle occupant. Each vent or opening 139 is sufficiently sized to permit a release of the contained gases inside the inflated airbag. The vent openings 139 are located in an upper portion on each side panel about midway between the inlet passage 230 and the front portion 212 and above each lobe portion 240, 242.

The lower lobe portions 240, 242 provide a lower force cushioning effect that is less severe than the top portion of the airbag 100b in that each lobe portion 240, 242 is free to move and deflect inwardly, both laterally on the side as well as internally relative to the recessed portion 220. An out-of-position vehicle occupant can compress or depress one lobe portion more than the other lobe portion, but due to the nature of the single inflatable chamber 301 being fully open to that portion created within the lobe portion, an easy deflection of this portion is possible such that a small child or infant will not receive a full impact of a conventional airbag upon deployment, as is also the case with the embodiment in figure 4B. The lobe portions 240, 242 are free to deflect in both directions laterally and rearwardly towards the instrument panel. The airbag's geometry is such that a small child or out-of-position child or a passenger seated close to the airbag will be struck by one or both of the lobe portions 240, 242 and the lobe portions being easily deflected reduces the amount of force applied to the vehicle occupant to greatly reduce the risk of injury. If the vehicle occupant is perfectly centered portions of both lobe portions 240, 242 can make contact as well as the recessed portion 220, which is restrained by the tether 250 as the airbag 100b inflates and prior to reaching a fully inflated state.

Figures 11A through 11H show each of the components or panels used to make the disclosed airbag. These panels are similar in shape and size to the panels shown in Figures 2 - 2B and are also made of woven airbag fabric of nylon or polyester. The main panel 212 forms a top, a bottom and a front portion of the airbag 100b. The main panel 212 has a symmetrical configuration wherein both of the ends 230a, 230b neck or narrow down to provide a portion of the gas inlet passageway 230. An opening 211 is surrounded by edges 212a, 212c, 212b, 212c of the opposite side.

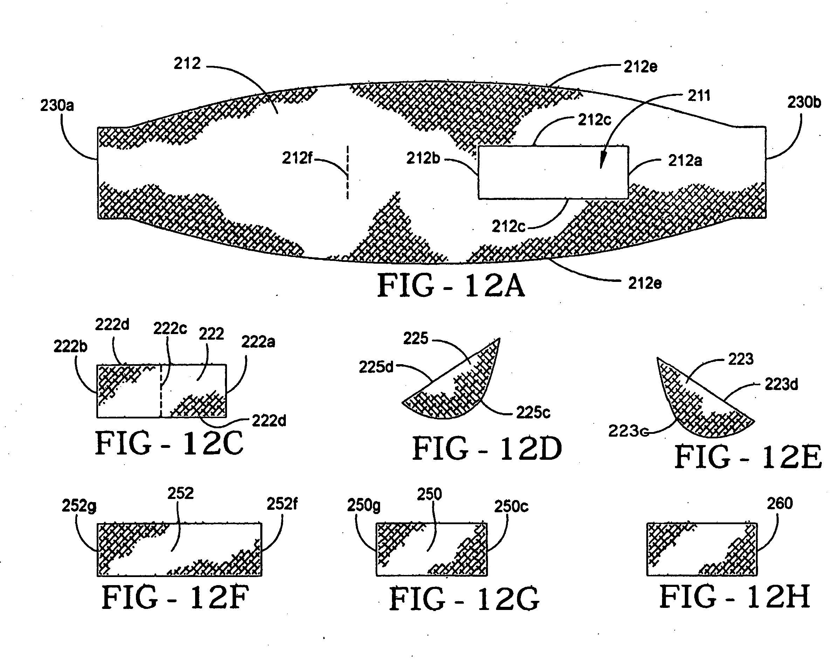

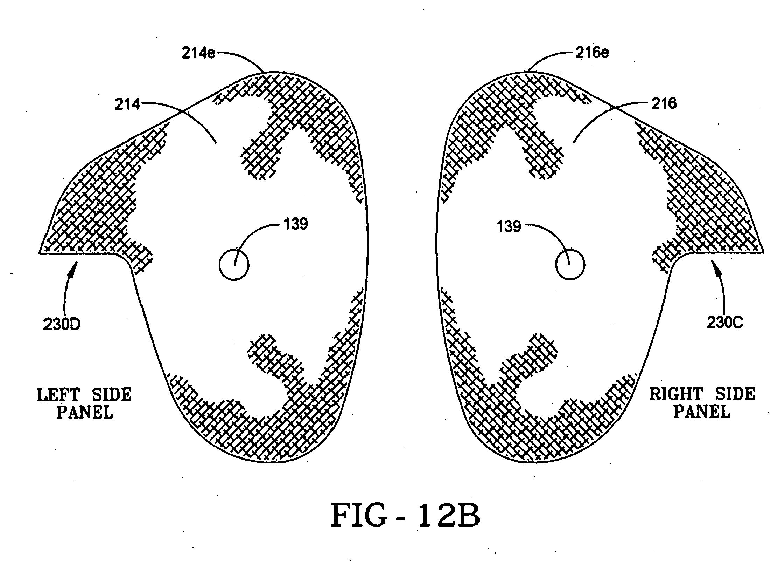

Figure 11B shows the side panels 214, 216 for the left and right sides of the airbag. The side panel 214 is for the left side of the airbag whereas the right side of the airbag 216 is illustrated being a mirror image of the side panel 214. Each of the panels 214, 216 has a neck portion 230d, 230c to provide a portion of the gas inlet passageway 230. A vent 139 can be provided as shown in Figures 11B and 12B on each side panel 214, 216. The edges 214e, 216e of the side panels are attached to the front main panel along the lateral edges 212e of the main panel. The edges of these panels can be sewn or otherwise fixed to one another to make the inflatable chamber 301. The opening 211 in the main panel is provided with a right recess panel and a left recess panel 226, 224. The right and left recess panels 224, 226 are sewn along their curved edges 224c, 226c to edge 212c of the opening 211 in the main panel. Once sewn to each side 212c of the rectangular opening 211 as illustrated, the side recess panels 224, 26 are then sewn at their straight edges 224d, 226d to the center recess panel 222 along edges 222d of the center recess panel. The recessed portion 220 has a pocket, cup or trough shaped form similar to that of the earlier embodiments that closes the entire opening 211 of the main panel 212. What in the deployed airbag will be the top and bottom edges 222a, 222b of the center recess panel 222 are sewn to the corresponding edges 212a, 212b of the opening 211 in the main panel.

In Figures 11F and 11G two tethers 250, 252 are provided. In Figures 10 and 11, the tether 250 is connected to the center recess panel 222 along a sew line 222c at location 250c on the tether 250. The opposite end 250g of the tether 250 is preferably sewn or attached at or near the bottom end 230b of the main panel 212 near the passageway 230 that is formed by the assembly of the main panel 212 and the two side panels 214, 216. The tether 250 is centered on and sewn to the main panel 212

In Figures 10, 11 and 11F, the second tether 252 is attached to the main panel 212 at location 212f, the end 252f being sewn there. At the opposite end 252g, the tether 252 can be attached near the passageway 230. A tether 250, 252 can be provided with an extension that can form all or a portion of the diffuser element 260. The diffuser element 260 can either be an integral component of a tether 250, 252 or a separate panel. As illustrated in Figure 11H, the diffuser element 260 can be a separate component, in which case both ends would need to be sewn to the main panel 212 traversing the passageway 230 on both sides of the main panel 212. The tether 252 secures the airbag 100b at an upper portion near or on the top portion of the main panel 212 such that in a fully extended position it is inclined with a slight vertical inclination and projects outwardly at about 45 degrees relative to the gas inlet passageway 230. This provides a restraint of the upward movement of the airbag. The lower tether 250 projects outwardly either horizontally or preferably slightly below the gas inlet passageway 230 and is shown attached to the center recess panel 222, which holds the recessed portion 220 in an open configuration.

Another airbag system is shown in Figures 12A through 12H. In Figures 12A through 12H are similar to Figures 7 through 11H. However, in Figures 12D and 12E the right and left recess panels 225, 223 have a curved side 223c, 225c, with the ends of the curved side connected by a single straight side 223d, 225d such that the outer contour of the airbag is maintained in a curvilinear fashion. The recessed portion 220 initiates at a point in both locations as opposed to having a deepened flat upper portion as shown in the first embodiment. Otherwise the assembly and locations are generally the same with the exception that in this embodiment the tether 250 should be attached at the location 222c to the lower portion of the recess along the lower corner at the location where the side recess panels 223, 225 intersect the main panel 212. The recessed portion 220 is held in the open position at one end of the semicircular recess panels 223, 225.

The airbag 100b of the present invention can be modified such that the recessed portion 220 as formed can have a more complex configuration. It is important that the recessed portion 222 should be tethered such that forward movement of the recessed portion is restrained and that the lobe portions 240, 242 can act independently to interact with a vehicle occupant such that the airbag can easily deform and collapse in that region such that the vehicle occupant will not be taking the full force of the deploying airbag 100b in the lower portion, as would be the case in the upper portion of the airbag striking an adult vehicle occupant. As shown, the center recess panel 222 and the opening 211 are rectangular and of similar width. Alternatively, the center recess panel can be made wider or narrower in width relative to the opening 211 such that the side panels are inclined, making tapered sidewalls of the recessed portion 220. The recess center panel 222 and the opening 211 can be oval or trapezoidal in shape or preferably larger at the bottom of the recessed portion 220 and narrower as the recessed portion 220 extends toward the upper portions. All of these refinements are considered within the scope of the present invention.

The airbag 100b has at least one tether attached to the center recess panel 222 at a location about halfway between the upper and lower ends 222a, 222b. The length of the upper tether 252 is greater than or equal to the sum of the length of the tether 250 attached to the center recess panel 222 and the distance from the location where the tether 250 is attached to the center recess panel 222 to the main panel 212 extending along the side recess panels 224, 226; 223, 225. The recessed portion or groove 220 has a width in the inflated airbag of at least 25% of the width of the front portion 126 of the main panel 212, preferably between 25% and 35% of the overall width; in general this may be about 150 - 250 mm. The overall length of the recess is between 40% and 65% of the overall airbag height. The recessed portion 222 has a maximum depth as measured along one of the side recess panels at or below a vertical point along the side recess panel. The maximum depth is equal to or greater than the width of the recessed portion 222. A typical groove or received portion may have a depth in the range of 120 - 250 mm.

An exemplary airbag 100b according to the present invention that was manufactured and tested had an overall width of 500 mm and an overall height of 650 mm with a 250 mm long recess 220 having a width of 120 mm and a depth ranging from 180 mm at the top of the recess to 235 mm at the bottom. The exemplary airbag was deployed using an inflator of the type shown in Figure 15. The inflator 505 has an inflator housing 511 filled with a pressurized medium containing an inert gas 506 and one or more heaters 501, 502 internal and connected at an end of the inflator housing 511. At least one of the gas heaters 501, 502 has an outer shell defining the heater housing 501 a having a plurality of heater holes 560, a gas generating chamber 507 in which a generant charge 527 is stored. The gas generating chamber 507 and the inflator housing 511 being in communication with each other through the plurality of holes 560, an ignition means 503 connected to the gas heater 502 and located at an end of the inflator housing 511, and an enhancer chamber 504, in which an enhancer charge is stored is disposed between the ignition means 503 and the gas heater 501, 502. The enhancer chamber 504 is located between the gas-generating chamber 507 and the ignition means 503 and is separated from the gas-generating chamber 507 by a bulkhead 540. The bulkhead 540 has one or more first openings 542 leading to the gas-generating chamber 507. Gas exits the inflator through passageways 561 in the inflator housing 511, then passes through the opening in the airbag to enter the inflatable chamber. The inflator 505 is a multistage type hybrid inflator that was successfully used in an evaluation test of an airbag 100b according to the present invention. The airbags of the present invention are functional with dual stage pyrotechnic and hybrid inflators and not limited to use with single stage inflators.

As shown in Figures 11A - 11G and 12A - 12G, the airbag panels may be separate fabric components that are attached, connected or sewn together along edges. Alternatively, the fabric can be knitted or woven wherein the individual components are formed simultaneously or as a unitary knitted structure. In such a case the present invention is equally applicable as this form of structure will have a top, front, bottom and sides with a vertically extending recessed portion 222 on the lower portion of the airbag 100b, similar if not identical to the sewn panel type airbag.

An airbag according to the present invention may be a part of an airbag module 300 having a module housing 303 with an inflator 308 inside the module housing 303. An airbag 100b according to the invention is attached to the module housing 303 and may be folded inside the module 300.

Regulations requiring that airbags be suitable for vehicle occupant of various sizes means that either the systems become far more complex or alternatively the systems have sensors that will prevent deployment of the airbag. The claimed invention satisfies these requirements.

## Claims

1. An airbag (100a) comprising: a single inflatable chamber (101) formed by a main panel (102b) and pair of side panels (104a, 104b) integral to or otherwise attached along mating edges wherein the main panel (102b) has an upper portion (135), a front portion (126) and a lower portion, a vertically extending recessed portion (110) formed on a forward facing portion of the airbag, the recessed portion (110) dividing the inflatable chamber (101) into two lobe portions (112a, 112b); and a tether (180) located in the inflatable chamber (101) and having an end attached to the recessed portion (110) and another end that is anchored thereby limiting forward movement of the recessed portion (110) upon inflation of the inflatable chamber (101), **characterized by** the upper portion (135) the main panel (102b) extending across an upper region of the recessed portion (110).

2. An airbag (100a) according to claim 1 wherein the recessed portion (110) extends to the lower portion of the main panel (102b).

3. An airbag (100a) according to claim 1 or 2 wherein the recessed portion (110) comprises a center recess panel (160) and a pair of side recess panels (150, 152), edges (150a, 152a) of the side recess panels (150, 152) being attached to or integrally formed with lateral edges (140c, 140d) of an opening (130b) in the front portion (126) of the main panel (102b) and the center recess panel (160) being attached to or integrally formed with upper and lower ends (140a, 140b) of the opening (130b) in the front portion (126) of the main panel (102b) and to edges (150a, 152a) of the side recess panels (150, 152) to form the recessed portion (110).

4. An airbag (100a) according to claim 3 wherein the side recess panels (150, 152) are symmetrically curved along an edge attached to or integrally formed with the main panel (102b).

5. An airbag (100a) according to claim 3 or 4wherein the side recess panels (150, 152) have an arcuate lower edge and a flat upper edge and a flat lower edge and wherein the tether (180) is attached to the center recess panel (160) at the inner most location of the flat upper edge.

6. An airbag (100a) according to any of claims 1 - 5 wherein the recessed portion (110) has a width in the inflated condition of at least 25% of the width of the front portion (126) of the main panel (102b).

7. An airbag (100a) according to any of claims 1 - 6 wherein the recessed portion (110) has a maximum depth as measured along one of the side recess panels (150, 152) at or below a vertical mid point of the side recess panel (150, 152).

8. An airbag (100a) according to any of claims 1 - 7 wherein the recessed portion (110) is one of rectangular, oval or trapezoidal in shape.

9. An airbag (100a) according to any of claims 1 - 8 wherein the main panel (102b), side panels (104a, 104b) and recessed portion (110) are woven or knitted to form the airbag (100a).

10. An airbag (100a) according to any of claims 1 - 9 attached to a module housing (303) with an airbag inflator (308) located in the module housing (303), the inflatable chamber (101) having a gas inlet passageway (230) anchored to the module housing (303) such that inflation gasses provided by the airbag inflator (308) can enter the inflatable chamber (101).

## Patentansprüche

1. Airbag (100a), umfassend: eine einzelne aufblasbare Kammer (101), gebildet durch ein Hauptfeld (102b) und ein Paar Seitenfelder (104a, 104b), die einstückig mit diesem oder entlang passender Ränder anderweitig befestigt sind, wobei das Hauptfeld (102b) einen oberen Abschnitt (135), einen vorderen Abschnitt (126) und einen unteren Abschnitt hat; einen sich vertikal erstreckenden vertieften Abschnitt (110), der auf einem nach vom gewandten Abschnitt des Airbags ausgebildet ist, wobei der vertiefte Abschnitt (110) die aufblasbare Kammer (101) in zwei Flügelabschnitte (112a, 112b) teilt; und eine Halteleine (180), die sich in der aufblasbaren Kammer (101) befindet und mit einem Ende am vertieften Abschnitt (110) befestigt und mit dem anderen Ende verankert ist, wodurch die Vorwärtsbewegung des vertieften Abschnitts (110) beim Aufblasen der aufblasbaren Kammer (101) begrenzt wird, **dadurch gekennzeichnet, daß** sich der obere Abschnitt (135) des Hauptfeldes (102b) über eine obere Region des vertieften Abschnitts (110) erstreckt.

2. Airbag (100a) nach Anspruch 1, wobei sich der vertiefte Abschnitt (110) bis zum unteren Abschnitt des Hauptfeldes (102b) erstreckt.

3. Airbag (100a) nach Anspruch 1 oder 2, wobei der vertiefte Abschnitt (110) ein Vertiefungsmittelfeld (160) und ein Paar Vertiefungsseitenfelder (150, 152) umfaßt, wobei Ränder (150a, 152a) der Vertiefungsseitenfelder (150, 152) an seitlichen Rändern (140c, 140d) einer Öffnung (130b) im vorderen Abschnitt (126) des Hauptfeldes (102b) befestigt oder einstückig mit diesen ausgebildet sind und das Vertiefungsmittelfeld (160) am oberen und unteren Ende (140a, 140b) der Öffnung (130b) im vorderen Abschnitt (126) des Hauptfeldes (102b) und an Rändern (150a, 152a) der Vertiefungsseitenfelder (150, 152) befestigt oder einstückig mit diesen ausgebildet sind, um den vertieften Abschnitt (110) zu bilden.

4. Airbag (100a) nach Anspruch 3, wobei die Vertiefungsseitenfelder (150, 152) entlang eines Randes, der am Hauptfeld (102b) befestigt oder einstückig mit diesem ausgebildet ist, symmetrisch gekrümmt sind.

5. Airbag (100a) nach Anspruch 3 oder 4, wobei die Vertiefungsseitenfelder (150, 152) einen bogenförmigen unteren Rand und einen flachen oberen Rand haben und wobei die Halteleine (180) am Vertiefungsmittelfeld (160) an der innersten Stelle des flachen oberen Randes befestigt ist.

6. Airbag (100a) nach einem der Ansprüche 1 bis 5, wobei der vertiefte Abschnitt (110) im aufgeblasenen Zustand eine Breite von mindestens 25% der Breite des vorderen Abschnitts (126) des Hauptfeldes (102b) hat.

7. Airbag (100a) nach einem der Ansprüche 1 bis 6, wobei der vertiefte Abschnitt (110) eine maximale Tiefe, gemessen entlang eines der Vertiefungsseitenfelder (150, 152), an oder unter einem vertikalen Mittelpunkt des Vertiefungsseitenfeldes (150, 152) hat.

8. Airbag (100a) nach einem der Ansprüche 1 bis 7, wobei der vertiefte Abschnitt (110) eine der folgenden Formen hat: rechteckig, oval oder trapezförmig.

9. Airbag (100a) nach einem der Ansprüche 1 bis 8, wobei das Hauptfeld (102b), die Seitenfelder (104a, 104b) und der vertiefte Abschnitt (1 10) gewebt oder gewirkt sind, um den Airbag (100a) zu bilden.

10. Airbag (100a) nach einem der Ansprüche 1 bis 9, befestigt an einem Modulgehäuse (303), wobei sich ein Gasgenerator (308) im Modulgehäuse (303) befindet, wobei die aufblasbare Kammer (101) eine Gaseinlaßöffnung (230) hat, die am Modulgehäuse (303) verankert ist, so daß die durch den Gasgenerator (308) bereitgestellten Aufblasgase in die aufblasbare Kammer (101) eintreten können.

## Revendications

1. Coussin gonflable (100a) comprenant: une chambre gonflable unique (101) formée par un panneau principal (102b) et une paire de panneaux latéraux (104a, 104b) solidaires ou sinon fixés le long de bords respectifs où le panneau principal (102b) a une partie supérieure (135), une partie avant (126) et une partie inférieure, une partie en retrait s'étendant verticalement (110) formée sur une partie faisant face vers l'avant du coussin gonflable, la partie en retrait (110) divisant la chambre gonflable (101) en deux portions de lobe (112a, 112b) ; et une attache (180) située dans la chambre gonflable (101) et ayant une extrémité fixée à la partie en retrait (110) et une autre extrémité qui est ancrée limitant ainsi un mouvement vers l'avant de la partie en retrait (110) lors du gonflage de la chambre gonflable (101), **caractérisé par le fait que** la partie supérieure (135) du panneau principal (102b) s'étend à travers une région supérieure de la partie en retrait (110).

2. Coussin gonflable (100a) selon la revendication 1, dans lequel la partie en retrait (110) s'étend vers la partie inférieure du panneau principal (102b).

3. Coussin gonflable (100a) selon la revendication 1 ou 2, dans lequel la partie en retrait (110) comprend un panneau de retrait central (160) et une paire de panneaux de retrait latéraux (150, 152), des bords (150a, 152a) des panneaux de retrait latéraux (150, 152) fixés à ou formés solidairement avec les bords latéraux (140c, 140d) d'une ouverture (130b) de la partie avant (126) du panneau principal (102b) et le panneau de retrait central (160) étant fixé à ou formé solidairement avec les extrémités supérieures et inférieures (140a, 140b) de l'ouverture (130b) dans la partie avant (126) du panneau principal (102b) et aux bords (150a, 152a) des panneaux de retrait latéraux (150, 152) pour former la partie en retrait (110).

4. Coussin gonflable (100a) selon la revendication 3, dans lequel les panneaux de retrait latéraux (150, 152) sont symétriquement incurvés le long d'un bord fixé à ou solidairement formé avec le panneau principal (102b).

5. Coussin gonflable (100a) selon la revendication 3 ou 4, dans lequel les panneaux de retrait latéraux (150, 152) ont un bord inférieur arqué et un bord supérieur plat et dans lequel l'attache (180) est fixée au panneau de retrait central (160) au niveau de l'emplacement le plus interne du bord supérieur plat.

6. Coussin gonflable (100a) selon l'une quelconque des revendications 1 à 5, dans lequel la partie en retrait (110) a une largeur dans la condition gonflée d'au moins 25 % de la largeur de la partie avant (126) du panneau principal (102b).

7. Coussin gonflable (100a) selon l'une quelconque des revendications 1 à 6, dans lequel la partie en retrait (110) a une profondeur maximale comme mesuré le long de l'un des panneaux de retrait latéraux (150, 152) au niveau de ou en dessous d'un point médian vertical du panneau de retrait latéral (150, 152).

8. Coussin gonflable (100a) selon l'une quelconque des revendications 1 à 7, dans lequel la partie en retrait (110) est d'une forme rectangulaire, ovale ou trapézoïdale.

9. Coussin gonflable (100a) selon l'une quelconque des revendications 1 à 8, dans lequel le panneau principal (102b), lesdits panneaux latéraux (104a, 104b) de la partie en retrait (110) sont tissés ou tricotés pour former le coussin gonflable (100a).

10. Coussin gonflable (100a) selon l'une quelconque des revendications 1 à 9 fixé à un logement de module (303) avec un dispositif de gonflage de coussin gonflable (308) situé dans le logement de module (303), la chambre gonflable (101) ayant un passage d'entrée de gaz (230), ancré au logement de module (303) de sorte que des gaz de gonflage fournis par le dispositif de gonflage de coussin gonflable (308) peuvent entrer dans la chambre gonflable (101).
